# EUROPEAN PATENT APPLICATION

(11) **EP 4 618 261 A1**
(43) Date of publication of application: **17.09.2025**
(21) Application number: 22968804.9
(22) Date of filing: 19.12.2022
(51) Int. Cl.: H01M 50/103, H01M 50/242

(54) **BATTERY AND ELECTRIC DEVICE**

(71) Applicant: Contemporary Amperex Technology (Hong Kong) Limited, Hong Kong (HK)
(72) Inventor: JIN, Haizu, Ningde, Fujian 352100 (CN); LI, Quanguo, Ningde, Fujian 352100 (CN); OUYANG, Chuying, Ningde, Fujian 352100 (CN); ZHAO, Fenggang, Ningde, Fujian 352100 (CN)
(74) Representative: Ran, Handong
(86) International application number: PCT/CN2022/140086
(87) International publication number: WO 2024/130500

(57) **Abstract**

A battery (100) and an electric device (200). The battery (100) comprises: a framework (10); a plurality of battery cells (20), wherein the plurality of battery cells (20) are all arranged in the framework (10), and the plurality of battery cells (20) are stacked in a first direction; and buffer structures (30), wherein in the first direction, the buffer structures (30) are disposed between at least two adjacent battery cells (20) and/or between the battery cells (20) at the outermost end and the framework (10).

## Description

### TECHNICAL FIELD

The present application relates to the field of batteries, and in particular, to a battery and a power consuming apparatus having the battery.

### BACKGROUND

In the related art, a plurality of battery cells are disposed in a shell of an existing battery. When a volume of the battery cell expands greatly, a large expansion force is caused, and the action of the expansion force on a frame of the battery easily causes deformation of the frame of the battery.

### SUMMARY

The present application is intended to resolve at least one of technical problems existing in the related art. In view of this, an embodiment of the present application provides a battery. When a battery cell in the battery expands, the battery cell moves in a stacking direction of the battery cell, so that an extrusion force on a frame can be reduced.

An embodiment of the present application further provides a power consuming apparatus.

According to a first aspect, an embodiment of the present application provides a battery, including:
a frame;
a plurality of battery cells, where the plurality of battery cells are all disposed in the frame, and the plurality of battery cells are stacked in a first direction; and
a buffer structure, where the buffer structure is disposed between at least two adjacent battery cells and/or between an outermost battery cell and the frame in the first direction.

In the foregoing technical solution, the buffer structure is disposed between the two adjacent battery cells and/or between the outermost battery cell and the frame. When the battery cell expands, the battery cell moves in a stacking direction of the battery cell under the action of an expansion extrusion force, and the buffer structure is compressed. Compared with the existing technology, the expansion extrusion force on the battery cell can be reduced, and the extrusion force on the frame can also be reduced, thereby greatly reducing a risk of deformation of the frame, and improving reliability of the battery.

In some embodiments, the buffer structure is disposed between the outermost battery cell and the frame. The buffer structure abuts against both the adjacent battery cell and the frame.

In the foregoing technical solution, on one hand, the buffer structure abuts against both the adjacent battery cell and the frame. The buffer structure can be stably disposed between the outermost battery cell and the frame. In addition, the buffer structure may support the battery cell, so that the plurality of battery cells can be reliably assembled in the frame, thereby reducing a risk that the battery cell shakes in the frame. On the other hand, the buffer structure between the outermost battery cell and the frame can better reduce the extrusion force on the frame.

In some embodiments, an orthographic projection of a shell of the battery cell is located within an orthographic projection of the buffer structure in the first direction.

In the foregoing technical solution, the orthographic projection of the shell of the battery cell is located within the orthographic projection of the buffer structure, so that an area for disposing the buffer structure is sufficient. When the battery cell expands, the battery cell moves toward the buffer structure, the battery cell can extrude the buffer structure, and the buffer structure can absorb more expansion force. The expansion extrusion force on the battery cell can be further reduced, and the extrusion force on the frame can also be reduced, thereby greatly reducing a risk of deformation of the frame under stress.

In some embodiments, the buffer structure has a first face and a second face opposite to each other. The first face and the second face are planar. The first face and the second face are in contact with the adjacent battery cell and the frame, respectively.

In the foregoing technical solution, the first face and the second face are disposed, and the first face and the second face are both planar. The buffer structure can be in face-to-face contact with the battery cell, and the buffer structure can be in face-to-face contact with the frame. When the battery cell moves in the first direction, the battery cell and the buffer structure can be uniformly stressed, thereby reducing stress concentration between the battery cell and the buffer structure.

In some embodiments, a through hole is provided in the buffer structure.

In the foregoing technical solution, it is beneficial for the buffer structure to be compressed by disposing a through hole, so that the buffer structure can better absorb the expansion force. In addition, a weight of the buffer structure can be reduced by disposing the through hole, which is beneficial for implementing a lightweight design of the battery. Also, materials for producing the buffer structure can be reduced, and production costs of the buffer structure can be reduced, thereby reducing production costs of the battery.

In some embodiments, a plurality of through holes are provided.

In the foregoing technical solution, it is more beneficial for the buffer structure to be compressed by disposing a plurality of through holes, so that the buffer structure can better absorb the expansion force. In addition, a weight of the buffer structure can be further reduced by disposing the plurality of through holes, which is more beneficial for implementing the lightweight design of the battery. Also, materials for producing the buffer structure can be further reduced, and production costs of the buffer structure can be further reduced, thereby further reducing production costs of the battery.

In some embodiments, the through hole has a strip-shaped structure and extends in a second direction perpendicular to the first direction.

In the foregoing technical solution, the through hole extends in the second direction. An area of disposing the through hole can be increased, which is more beneficial to compressing the buffer structure, so that the buffer structure can better absorb the expansion force. In addition, the weight of the buffer structure can be further reduced, which is more beneficial to implementing the lightweight design of the battery.

In some embodiments, the plurality of through holes are parallel to each other.

In the foregoing technical solution, the plurality of through holes are parallel to each other, so that structural strengths of regions of the buffer structure can be approximately the same. When the buffer structure is extruded, compression amounts of the regions of the buffer structure are approximately the same.

In some embodiments, the plurality of through holes are spaced apart in a third direction perpendicular to the first direction. The second direction is perpendicular to the third direction.

In the foregoing technical solution, the plurality of through holes are spaced apart in the third direction, so that structural strengths of regions of the buffer structure can be further approximately the same. When the buffer structure is extruded, compression amounts of the regions of the buffer structure are approximately the same.

In some embodiments, the through hole has a circular or polygonal cross section.

In the foregoing technical solution, the through hole has the circular or polygonal cross section, so that the through hole can better absorb compressive deformation, thereby reducing stress on the battery cell and the frame.

In some embodiments, a through hole is provided in the buffer structure. The buffer structure has a first face and a second face opposite to each other in the first direction. The through hole has an elongated cross section. The through hole is located between the first face and the second face. In a direction from the first face to the second face, the through hole is obliquely arranged between the first face and the second face.

In the foregoing technical solution, the through hole is obliquely arranged between the first face and the second face, so that when the battery cell expands, it is beneficial for the buffer structure to be compressed.

In some embodiments, the cross section of the through hole has a longest hole sidewall opposite to the first face. An angle formed between the hole sidewall and the first face or the second face is α, satisfying the following relation: 40°≤α≤50°.

In the foregoing technical solution, 40°≤α≤50°. When the battery cell expands, it is more beneficial for the buffer structure to be compressed. When the volume of the battery cell is reduced, it is beneficial for the buffer structure to rebound to an original form.

In some embodiments, a height of an end of the through hole close to the first face is smaller than a height of an end of the through hole close to the second face. The first face is configured to abut against the battery cell.

In the foregoing technical solution, the height of the end of the through hole close to the first face is smaller than the height of the end of the through hole close to the second face. After the first face is in contact with the battery cell, when the battery cell expands, the battery cell has a tendency to move downward in a process that the buffer structure is compressed, thereby reducing a risk of upward movement of the battery cell.

In some embodiments, the buffer structure has a first face and a second face opposite to each other in the first direction. The first face or the second face is provided with a supporting protrusion. The supporting protrusion abuts against the adjacent battery cell or the frame.

In the foregoing technical solution, the first face or the second face is provided with the supporting protrusion. When the battery cell moves in the first direction, it is beneficial for the buffer structure to deform.

In some embodiments, a plurality of supporting protrusions are provided.

In the foregoing technical solution, the plurality of supporting protrusions are provided. When the battery cell moves in the first direction, it is more beneficial for the buffer structure to deform.

In some embodiments, at least two of the supporting protrusions are configured as strip-shaped protrusions parallel to each other.

In the foregoing technical solution, the at least two of the supporting protrusions are configured as the strip-shaped protrusions parallel to each other. Structural strengths of regions of the buffer structure can be approximately the same. When the buffer structure is extruded, the buffer structure is uniformly stressed, and compression amounts of the regions of the buffer structure are approximately the same.

In some embodiments, a compressive deformation amount of the buffer structure is A, satisfying a relation: 10%≤A≤60%.

In the foregoing technical solution, 10%≤A≤60% is set. The buffer structure can be prevented from being excessively compressed, and the buffer structure can rebound after being compressed.

In some embodiments, a material of the buffer structure includes one or more of high-polymer rubber, a polyurethane-type foamer, a pine elastic plate, or fiber wool.

In the foregoing technical solution, the material of the buffer structure is at least one of high-polymer rubber, the polyurethane-type foamer, the pine elastic plate, or the fiber wool. The buffer structure is compressible, and the buffer structure is also elastic. After being compressed, the buffer structure can rebound.

In some embodiments, the plurality of battery cells are movable in the first direction.

In some embodiments, the plurality of battery cells are movable in the first direction. When the battery cell expands, the battery cell moves in the stacking direction of the battery cell under the action of the expansion extrusion force, and the buffer structure is compressed. The extrusion force on the frame can be reduced, thereby greatly reducing a risk of deformation of the frame. In addition, the expansion compression force on the battery cell can be reduced, and a risk that the battery cell is crushed can be reduced, thereby further improving the reliability of the battery.

In some embodiments, the frame is in guide fit with the plurality of battery cells so that the plurality of battery cells are movable in the first direction.

In the foregoing technical solution, in a process of moving the battery cell, the frame is in guide fit with the plurality of battery cells so that the battery cell is movable in the first direction, thereby reducing a risk of offset of the battery cell.

In some embodiments, the frame includes: a first end position-limiting member and a second end position-limiting member, where in the first direction, the first end position-limiting member and the second end position-limiting member are respectively located at both ends of the battery cell, and the plurality of battery cells are located between the first end position-limiting member and the second end position-limiting member.

In the foregoing technical solution, the first end position-limiting member and the second end position-limiting member are disposed. The first end position-limiting member and the second end position-limiting member may limit the battery cell in the first direction.

In some embodiments, the frame further includes: a guide position-limiting member, where the guide position-limiting member is connected between the first end position-limiting member and the second end position-limiting member so that the first end position-limiting member and the second end position-limiting member are fixedly connected, and the guide position-limiting member is in guide fit with the plurality of battery cells so that the battery cells are movable in the first direction.

In the foregoing technical solution, the guide position-limiting member is disposed. The guide position-limiting member is in guide fit with the plurality of battery cells, so that the battery cells are movable in the first direction, thereby reducing a risk of offset of the battery cell under the action of the expansion force.

In some embodiments, the guide position-limiting member includes: a first position-limiting plate, a second position-limiting plate, a third position-limiting plate, and a fourth position-limiting plate, where the first position-limiting plate, the second position-limiting plate, the third position-limiting plate, and the fourth position-limiting plate are connected between the first end position-limiting member and the second end position-limiting member and located outside the battery cell, the first position-limiting plate, the second position-limiting plate, the third position-limiting plate, and the fourth position-limiting plate are respectively opposite to different surfaces of the battery cell, and the first position-limiting plate, the second position-limiting plate, the third position-limiting plate, and the fourth position-limiting plate all abut against and limit the battery cell.

In the foregoing technical solution, the first position-limiting plate, the second position-limiting plate, the third position-limiting plate, and the fourth position-limiting plate simultaneously limit and guide the battery cell. When the battery cell is moved by the expansion force, the battery cell is movable in the stacking direction of the battery cells.

In some embodiments, the guide position-limiting member includes: a position-limiting sliding rail, where the position-limiting sliding rail defines a guide space, the position-limiting sliding rail is connected between the first end position-limiting member and the second end position-limiting member, and shoulders of the plurality of battery cells are assembled in the guide space so that the battery cells abut against and are limited by the position-limiting sliding rail.

In the foregoing technical solution, after the battery is assembled, a shoulder of the battery cell is assembled in the guide space. When the battery cell abuts against the position-limiting sliding rail, the position-limiting sliding rail may limit movement of the battery cell, so that the battery cell can move only in the stacking direction.

In some embodiments, a plurality of position-limiting sliding rails are provided. At least two shoulders of each battery cell are correspondingly provided with the position-limiting sliding rails. The shoulders are located in the corresponding guide spaces.

In the foregoing technical solution, the battery cell is guided by using a plurality of position-limiting sliding rails simultaneously, and the battery cell can move only in the stacking direction of the battery cell, thereby further reducing a risk of offset of the battery cell. In addition, the battery cell is supported by using the plurality of position-limiting sliding rails, and the battery cell can be stably mounted in the frame.

In some embodiments, two shoulders located below the battery cell are separately correspondingly provided with one position-limiting sliding rail, to form an exhaust gap between the two position-limiting sliding rails. The exhaust gap is opposite to an anti-explosion valve of the battery cell.

In the foregoing technical solution, the exhaust gap is disposed. When a thermal runaway occurs in the battery cell, an anti-explosion valve is turned on, and the exhaust gap is beneficial for a material sprayed from the anti-explosion valve out of the battery cell more quickly.

In some embodiments, the position-limiting sliding rails each include: a first plate body and a second plate body, where the first plate body is connected to the second plate body, and an angle is formed between the first plate body and the second plate body so that the position-limiting sliding rail defines the guide space.

In the foregoing technical solution, the angle is formed between the first plate body and the second plate body so that the position-limiting sliding rail defines the guide space, thereby achieving an effect that the position-limiting sliding rail defines the guide space, and enabling the position-limiting sliding rail to be structurally reasonable.

In some embodiments, the first plate body is perpendicular to the second plate body.

In the foregoing technical solution, the first plate body is perpendicular to the second plate body. After the position-limiting sliding rail and the battery cell are assembled, the first plate body and the second plate body can reliably limit the battery cell, thereby improving the reliability of the battery.

In some embodiments, the first plate body abuts against and limits an end face of the battery cell, and the second plate body abuts against and limits a side face of the battery cell.

In the foregoing technical solution, the first plate body abuts against and limits the end face of the battery cell, and the second plate body abuts against and limits the side face of the battery cell. Each position-limiting sliding rail can limit the battery cell in Y and Z directions, thereby improving the reliability of the battery.

In some embodiments, the battery further includes: an electrical connector, where the electrical connector includes a first connection portion, a second connection portion, and an elastic section, the first connection portion and the second connection portion are respectively connected to electrode terminals of the corresponding battery cells, and the elastic section is connected between the first connection portion and the second connection portion.

In the foregoing technical solution, the elastic section is connected between the first connection portion and the second connection portion. When the battery cell moves in the first direction, the elastic section is extended, thereby reducing a risk of tearing or breaking a connection between the electrical connector and the electrode terminal, improving the reliability of connection between the electrical connector and the electrode terminal, and improving the working reliability of the battery.

In some embodiments, the elastic section has a first connection section, a second connection section, and a third connection section. The first connection section is connected between the second connection section and the first connection portion. The third connection section is connected between the second connection section and the second connection portion.

In the foregoing technical solution, the first connection section, the second connection section, and the third connection section are disposed. The elastic section may be elastic, and the elastic section may be flexible.

In some embodiments, a dimension of the second connection section in a width direction of the electrical connector is greater than a dimension of the second connection section in a length direction of the electrical connector.

In the foregoing technical solution, the dimension L1 of the second connection section in the width direction of the electrical connector is greater than the dimension L2 of the second connection section in the length direction of the electrical connector. The second connection section extends in the width direction of the electrical connector, thereby achieving better flexibility of the electrical connector.

In some embodiments, a dimension of the first connection section in the width direction of the electrical connector is less than a dimension of the first connection section in the length direction of the electrical connector, and/or a dimension of the third connection section in the width direction of the electrical connector is less than a dimension of the third connection section in the length direction of the electrical connector.

In the foregoing technical solution, the dimension L3 of the first connection section in the width direction of the electrical connector is less than the dimension L4 of the first connection section in the length direction of the electrical connector. The first connection section extends in the length direction of the electrical connector, the elastic section may be elastic, and the flexibility of the electrical connector is improved. In addition, the dimension L5 of the third connection section in the width direction of the electrical connector is less than the dimension L6 of the third connection section in the length direction of the electrical connector. The third connection section extends in the length direction of the electrical connector, the flexibility of the electrical connector is further improved, and it is more beneficial for the electrical connector to be flexible.

In some embodiments, the second connection section includes: a plurality of first section bodies and at least one second section body, where the plurality of first section bodies are sequentially spaced apart in the length direction of the electrical connector, and the second section body is connected between any two adjacent first section bodies.

In the foregoing technical solution, the plurality of first section bodies and the at least one second section body are disposed. The elastic section can be elastic, and the electrical connector is flexible, thereby reducing a risk that the electrical connector is not flexible when the battery cell moves.

In some embodiments, the dimension L7 of the at least one first section body in the width direction of the electrical connector is greater than the dimension L8 of the first section body in the length direction of the electrical connector, and the dimension L9 of the second section body in the width direction of the electrical connector is less than the dimension L10 of the second section body in the length direction of the electrical connector.

In the foregoing technical solutions, the dimension of the at least one of the first section bodies in the width direction of the electrical connector is greater than the dimension of the first section body in the length direction of the electrical connector, and the dimension of the second section body in the width direction of the electrical connector is less than the dimension of the second section body in the length direction of the electrical connector. The at least one first section body extends in the width direction of the electrical connector, and the second section body extends in the length direction of the electrical connector. The elastic section can be elastic, and the electrical connector is flexible, thereby reducing a risk that the electrical connector is not flexible when the battery cell moves.

In some embodiments, at least two of the first section bodies are parallel to each other.

In the foregoing technical solution, the at least two of the first section bodies are parallel to each other. The second connection section can be configured as a bending structure, and the elasticity of the second connection section can be improved, thereby improving the elasticity of the electrical connector.

In some embodiments, in the length direction of the electrical connector, an outermost second section body is staggered from an adjacent first connection section and/or third connection section in the width direction of the electrical connector.

In the foregoing technical solution, the outermost second section body is staggered from the adjacent first connection section and/or third connection section in the width direction of the electrical connector. The elasticity of the electrical connector can be further increased, and it is beneficial for the electrical connector to be flexible.

In some embodiments, in the width direction of the electrical connector, the first connection section and the third connection section are staggered.

In the foregoing technical solution, the first connection section and the third connection section are staggered. The elastic section can be elastic, and the elastic section can be flexible, thereby facilitating deformation of the elastic section, and further preventing the electrical connector from being disconnected from the corresponding electrode terminal.

In some embodiments, in the length direction of the electrical connector, the first connection section and the third connection section correspond to each other.

In the foregoing technical solution, the first connection section and the third connection section are correspondingly disposed in the length direction of the electrical connector. The deformation amount of the elastic section can be increased, and the flexibility of the electrical connector can be improved.

In some embodiments, the elastic section is configured as a helical structure.

In the foregoing technical solution, the elastic section may be set in a shape similar to a helical spring. The elastic section is elastic, and the elastic section is flexible, so that the electrical connector is flexible.

In some embodiments, the first connection portion, the second connection portion, and the elastic section are integrally formed.

In the foregoing technical solution, the first connection portion, the second connection portion, and the elastic section are integrally formed. The connection strength between the first connection portion, the second connection portion, and the elastic section can be improved, and the elastic section can be prevented from being separated from the first connection portion and the second connection portion. In addition, the electrical connector does not need to be separately produced, so that development of molds can be reduced, and manufacturing costs can be reduced.

In some embodiments, the elastic section has a plurality of notch grooves. The plurality of notch grooves penetrate the elastic section in a thickness direction of the elastic section. The plurality of notch grooves are sequentially spaced apart in the length direction of the electrical connector. At least one notch groove extends to a side edge of the elastic section in the width direction of the electrical connector.

In the foregoing technical solution, the plurality of notch grooves are disposed. The elastic section can be elastic. When the battery cell moves, a risk of tearing or breaking a connection between the electrical connector and the electrode terminal of the corresponding battery cell is reduced by using the flexible elastic section.

In some embodiments, a dimension of each notch groove in the width direction of the electrical connector is greater than a dimension of the notch groove in the length direction of the electrical connector.

In the foregoing technical solution, the dimension of each notch groove in the width direction of the electrical connector is greater than a dimension of the notch groove in the length direction of the electrical connector. The notch groove can be set as a strip-shaped notch groove, and when the first connection portion and the second connection portion are stressed, the elastic section is deformed.

In some embodiments, in the width direction of the electrical connector, both sides of the elastic section are separately provided with the notch groove.

In the foregoing technical solution, both sides of the elastic section are separately provided with the notch groove. The electrical connector can be flexible, thereby improving the working performance of the electrical connector.

According to a second aspect, an embodiment of the present application further provides a power consuming apparatus, including the foregoing battery.

Other aspects and advantages of the present application will be given in the following description, some of which will become apparent from the following description or may be learned from practices of the present application.

### BRIEF DESCRIPTION OF THE DRAWINGS

FIG. 1 is a schematic diagram of a power consuming apparatus according to an embodiment of the present application;
FIG. 2 is a schematic diagram of a battery according to an embodiment of the present application;
FIG. 3 is a schematic diagram of a battery according to an embodiment of the present application;
FIG. 4 is a schematic diagram of a battery from another perspective according to an embodiment of the present application;
FIG. 5 is a schematic diagram of a battery from another perspective according to an embodiment of the present application;
FIG. 6 is a schematic diagram of a battery from another perspective according to an embodiment of the present application;
FIG. 7 is a schematic diagram of a buffer structure according to a first embodiment of the present application;
FIG. 8 is a schematic diagram of a buffer structure from another perspective according to an embodiment of the present application;
FIG. 9 is a sectional view of B-B in FIG. 7;
FIG. 10 is a schematic diagram of a buffer structure according to a second embodiment of the present application;
FIG. 11 is an enlarged view of C in FIG. 9;
FIG. 12 is a schematic diagram of a buffer structure according to a third embodiment of the present application;
FIG. 13 is a schematic diagram of a buffer structure from another perspective according to a third embodiment of the present application;
FIG. 14 is a schematic diagram of a first end position-limiting member according to an embodiment of the present application;
FIG. 15 is a schematic diagram of a position-limiting sliding rail according to an embodiment of the present application;
FIG. 16 is an enlarged view of D in FIG. 14;
FIG. 17 is a schematic diagram of an electrical connector according to a first embodiment of the present application;
FIG. 18 is a schematic diagram of an electrical connector according to a second embodiment of the present application; and
FIG. 19 is a schematic diagram of a battery cell according to an embodiment of the present application.

### DETAILED DESCRIPTION

To make the objectives, technical solutions, and advantages of embodiments of the present application clearer, the following clearly describes the technical solutions in the embodiments of the present application with reference to the accompanying drawings in the embodiments of the present application. Apparently, the described embodiments are merely some embodiments of the present application rather than all of the embodiments. All other embodiments obtained by a person of ordinary skill in the art based on the embodiments of the present application without making creative efforts shall fall within the protection scope of the present application.

Unless otherwise defined, meanings of all technical and scientific terms used in this specification are the same as those usually understood by a person skilled in the art to which the present application belongs. In the present application, terms used in the specification of the present application are merely intended to describe objectives of specific embodiments, but are not intended to limit the present application. The terms "include/comprise" and "have" and any variations thereof in the specification and claims of the present application and the Brief Description of the Drawings are intended to cover non-exclusive inclusions. The terms "first", "second", etc. in the specification and claims of the present application or the drawings are intended to distinguish different objects, and not to describe a specific order or primary-secondary relationship.

Reference to "an embodiment" in the present application means that a particular feature, structure or characteristic described in combination with the embodiment may be included in at least one embodiment of the present application. The presence of the phrase in various places in the specification does not necessarily refer to the same embodiment, nor is it an independent or alternative embodiment that is mutually exclusive from other embodiments.

In the description of the present application, it should be noted that unless otherwise explicitly specified or defined, the terms such as "mount", "connect", "connection", and "attach" should be understood in a broad sense. For example, the connection may be a fixed connection, a detachable connection, or an integral connection; or the connection may be a direct connection, an indirect connection through an intermediary, or internal communication between two components. A person of ordinary skill in the art may understand the specific meanings of the foregoing terms in the present application according to specific situations.

In the present application, the term "and/or" is merely an association to describe associated objects, and means that there are three relationships, such as A and/or B, which means that A exists alone, A and B exist at the same time, and B exists alone. In addition, the character "/" in the present application generally indicates an "or" relationship between the associated objects.

In the embodiments of the present application, same reference numerals represent same components, and for brevity, detailed descriptions of the same components are omitted in different embodiments. It will be appreciated that dimensions, such as the thickness, the length, and the width of various components in the embodiments of the present application and the entire thickness, length, and the width of an integrated apparatus shown in the accompanying drawings are merely exemplary descriptions, and should not be construed as any limitation to the present application.

"Plurality of" in the present application means two or more (including two).

A battery 100 mentioned in an embodiment of the present application may be a single physical module including one or more battery cells 20 to provide a higher voltage and a higher capacity. When there are a plurality of battery cells 20, the plurality of battery cells 20 are connected in series, in parallel, or in a series-parallel mixed manner by using an electrical connector 40.

In some embodiments, the battery 100 may be a battery module. When there are a plurality of battery cells 20, the plurality of battery cells 20 are arranged and fixedly formed into a battery module.

In some embodiments, the battery 100 may be a battery pack. The battery pack includes a box and battery cells 20, where the battery cells 20 or the battery module is accommodated in the box.

In some embodiments, the box may be used as a part of a chassis structure of a vehicle. For example, a part of the box may be at least a part of a floor of the vehicle, or a part of the box may be at least a part of a cross beam and a longitudinal beam of the vehicle.

In some embodiments, the battery 100 may be an energy storage apparatus. The energy storage apparatus includes an energy storage container, an energy storage electric cabinet, and the like.

In the embodiments of the present application, the battery cells 20 may be secondary batteries. The secondary batteries refer to the battery cells 20 that may be continuously used by activating an active material in a charging manner after the battery cells 20 are discharged.

The battery cell 20 may be at least one of a lithium-ion battery cell, a sodium-ion battery cell, a sodium-lithium-ion battery cell, a lithium metal battery cell, a sodium metal battery cell, a lithium-sulfur battery cell, a magnesium-ion battery cell, a nickel-metal hydride battery cell, a nickel-cadmium battery cell, a lead-acid battery cell, and the like, which is not limited in the embodiments of the present application.

The battery cell 20 generally includes an electrode assembly. The electrode assembly includes a positive electrode, a negative electrode, and a spacer. During charging and discharging of the battery cell 20, active ions (for example, lithium ions) are intercalated and deintercalated back and forth between the positive electrode and the negative electrode. The spacer is disposed between the positive electrode and the negative electrode, mainly to prevent a short circuit between the positive and negative electrodes and to allow active ions to pass through.

In some embodiments, the positive electrode may be a positive electrode plate. The positive electrode plate may include a positive electrode current collector and a positive electrode active material disposed on at least one surface of the positive electrode current collector.

As an example, the positive electrode current collector has two surfaces opposite to each other in a thickness direction of the positive electrode current collector, and the positive electrode active material is disposed on either or both of the two opposite surfaces of the positive electrode current collector.

As an example, the positive electrode current collector may be a metal foil or a composite current collector. For example, silver surface-treated aluminum or stainless steel, stainless steel, copper, aluminum, nickel, a carbon electrode, carbon, nickel, titanium, or the like may be used as the metal foil. The composite current collector may include a high-polymer material substrate and a metal layer. The composite current collector may be formed by forming a metal material (aluminum, an aluminum alloy, nickel, a nickel alloy, titanium, a titanium alloy, silver, a silver alloy, or the like) on the high-polymer material substrate (for example, a substrate of polypropylene, polyethylene terephthalate, polybutylene terephthalate, polystyrene, or polyethylene).

As an example, the positive electrode active material may include at least one of the following materials: a lithium-containing phosphate, a lithium transition metal oxide, and their respective modified compounds. However, the present application is not limited to such materials, and may alternatively use another conventional material that may be used as a positive electrode active material for batteries.

In some embodiments, the negative electrode may be a negative electrode plate. The negative electrode plate may include a negative electrode current collector.

As an example, the negative electrode current collector may be a metal foil or a composite current collector. For example, silver surface-treated aluminum or stainless steel, stainless steel, copper, aluminum, nickel, a carbon electrode, carbon, nickel, titanium, or the like may be used as the metal foil.

In some implementations, the spacer is a separator. The type of the separator is not particularly limited in the present application, and any well-known separator with a porous structure having good chemical stability and mechanical stability may be selected.

As an example, a main material of the separator may be selected from at least one of glass fiber, non-woven fabric, polyethylene, polypropylene, and polyvinylidene fluoride. The separator may be a single-layer film or a multilayer composite film without special limitations. When the separator is a multilayer composite film, materials of layers may be the same or different without special limitations. The spacer may be an independent component located between the positive and negative electrodes, or may be attached to surfaces of the positive and negative electrodes.

In some implementations, the spacer is a solid electrolyte. The solid electrolyte is disposed between the positive electrode and the negative electrode, and simultaneously functions to transfer an ion and space the positive electrode and the negative electrode.

In some implementations, the electrode assembly is a winding structure. The positive electrode plate and the negative electrode plate are wound into the winding structure.

In some implementations, the electrode assembly is a laminating structure.

In some implementations, the battery cell 20 may include a shell. The shell is configured to encapsulate the electrode assembly, the electrolyte, and other components. The shell may be a steel shell, an aluminum shell, a plastic shell (for example, polypropylene), a composite metal shell (for example, a copper-aluminum composite shell), an aluminum-plastic film, or the like.

In some implementations, the shell includes an end cover and a case. The case is provided with an opening, and the end cover closes the opening to form a closed space for accommodating materials such as the electrode assembly and the electrolyte. The case may be provided with one or more openings. One or more end covers may alternatively be provided.

In some implementations, at least one electrode terminal is disposed on the shell, and the electrode terminal is electrically connected to a tab of the electrode assembly. The electrode terminal may be directly connected to the tab, or may be indirectly connected to the tab by using an adapter component. The electrode terminal may be disposed on the end cover, or may be disposed on the case.

In some implementations, an anti-explosion valve 23 is disposed on the shell. The anti-explosion valve 23 is configured to relieve an internal pressure of the battery cell.

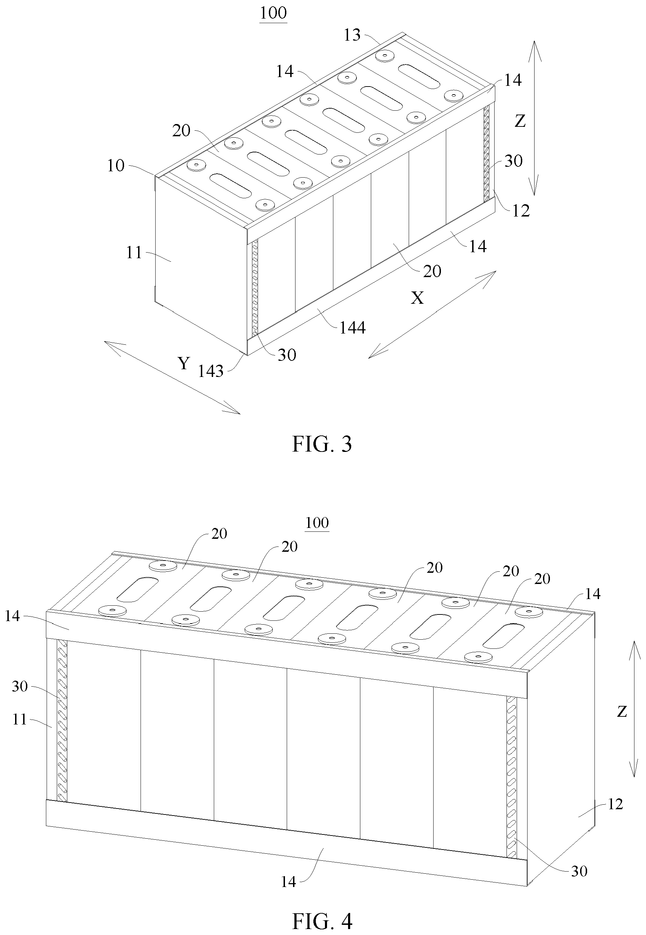

As an example, the battery cell 20 may be a cylindrical battery cell 20, a prismatic battery cell 20, a pouch cell 20, or a battery cell 20 of another shape. The prismatic battery cell 20 includes a square battery cell 20, a blade-shaped battery cell 20, and a multi-prismatic battery. The multi-prismatic battery is, for example, a hexagonal prismatic battery. This is not specifically limited in the embodiments of the present application. Referring to FIG. 4, in the embodiments of the present application, a square battery cell 20 is used as an example.

In recent years, new energy automobiles have been rapidly developed. In the field of electric automobiles, a battery, as a power source of an electric automobile, plays an important role that is irreplaceable. The battery includes a box and a plurality of battery cells accommodated in the box. As a core part of a new energy automobile, a battery has high requirements in terms of safety and cycle life.

The inventor finds that when an existing battery is charged, a volume of a battery cell expands greatly, causing a large expansion force. After the expansion force acts on an adjacent battery cell, the battery cell is extruded and easily crushed. In addition, the expansion force acts on a frame of the battery, easily causing deformation of the frame of the battery and affecting the cycle life of the battery.

Based on the foregoing consideration, to resolve a problem that the frame of the battery is deformed by extrusion during charging of the battery, the inventor makes intensive research to design a battery. A buffer structure is disposed between two adjacent battery cells and/or between an outermost battery cell and a frame. When the battery cell expands, the battery cell moves in a stacking direction of the battery cell 20 under the action of an expansion extrusion force, and the buffer structure is compressed. Compared with the existing technology, the expansion extrusion force on the battery cell can be reduced, and the extrusion force on the frame can also be reduced, thereby greatly reducing a risk of deformation of the frame, improving reliability of the battery, and prolonging the cycle life of the battery.

The battery disclosed in the embodiments of the present application may be used in but is not limited to a power consuming apparatus such as a vehicle, a ship, or an aircraft. This is beneficial to improving an applicable range of the battery.

An embodiment of the present application provides a power consuming apparatus using a battery as a power supply. The power consuming apparatus may be, but is not limited to, a mobile phone, a tablet, a laptop, an electric toy, an electric tool, a battery car, an electric automobile, a ship, a spacecraft, or the like. The electric toy may include a fixed or mobile electric toy, for example, a game console, an electric automobile toy, an electric ship toy, and an electric airplane toy. The spacecraft may include an airplane, a rocket, a spacecraft, a spaceship, and the like.

For ease of description, the following embodiment is described by using an example in which a power consuming apparatus according to an embodiment of the present application is a vehicle.

In some embodiments of the present application, the battery can not only serve as a power supply for operating the vehicle, but can also serve as a power supply for driving the vehicle, in place of or partially in place of fuel or natural gas, to provide driving power for the vehicle.

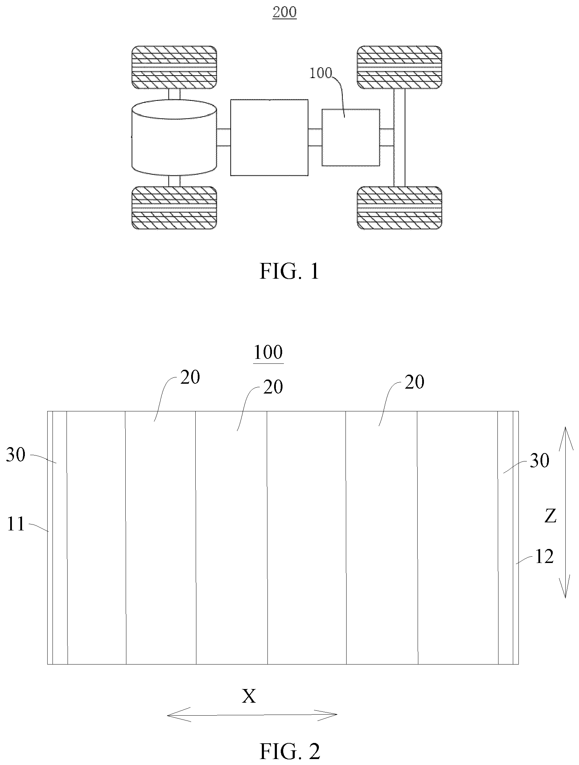

A battery 100 according to an embodiment of the present application is described below with reference to FIG. 1 to FIG. 19.

As shown in FIG. 2 to FIG. 5, the battery 100 according to an embodiment of the present application includes: a frame 10, a buffer structure 30, and a plurality of battery cells 20. The plurality of battery cells 20 are all disposed in the frame 10, and the plurality of battery cells 20 are stacked in a first direction. The buffer structure 30 is disposed between at least two adjacent battery cells 20 and/or between an outermost battery cell 20 and the frame 10 in the first direction.

When the battery 100 is a battery pack, the frame 10 may be a box structure of the battery 100, or the frame 10 may be a structure of a part of a box of the battery 100. When the battery 100 is a battery module (namely, a battery module), the frame 10 may be a first end position-limiting member and a second end position-limiting member of the battery module, or the frame 10 may be a first end position-limiting member, a second end position-limiting member, and a guide position-limiting member mentioned below of the battery module, or the frame 10 may be a first end position-limiting member, a second end position-limiting member, and a side-plate structure of the battery module. The side-plate structure connects the first end position-limiting member and the second end position-limiting member to form the frame 10 surrounding the plurality of battery cells 20.

The buffer structure 30 may be a cushion, and any structural member that can provide an elastic buffering effect to the buffer structure 30 may be configured as the buffer structure 30.

The plurality of battery cells 20 are disposed in the frame 10. The plurality of battery cells 20 are sequentially stacked in a thickness direction of the battery cells 20. The thickness direction of the battery cells 20 may be the first direction. When the battery 100 is placed in a placing direction in FIG. 2, the first direction refers to an X direction in FIG. 2. The buffer structure 30 is disposed between at least two adjacent battery cells 20 and/or between the outermost battery cell 20 and the frame 10 in a stacking direction (the first direction) of the battery cells 20, namely in the X direction of the battery 100 in FIG. 2. This may alternatively be understood as that the buffer structure 30 is disposed between at least two adjacent battery cells 20, or the buffer structure 30 is disposed between the outermost battery cell 20 and the frame 10 in the first direction, or the buffer structure 30 is disposed between at least two adjacent battery cells 20 and between the outermost battery cell 20 and the frame 10. The embodiments of the present application are described by using an example in which the buffer structure 30 is disposed between the outermost battery cell 20 and the frame 10 in the first direction.

As shown in FIG. 2, large faces of two adjacent battery cells 20 are opposite to each other. The buffer structure 30 is compressible, and has particular elasticity. The buffer structure 30 may absorb a force when being compressed. When the battery cell 20 expands, the volume of the battery cell 20 increases, and the buffer structure 30 is compressed to absorb an expansion force. Compared with the existing technology, an expansion compression force on the battery cell 20 can be reduced, thereby reducing a risk that the battery cell 20 is crushed. An extrusion force on the frame 10 can be reduced, thereby greatly reducing a risk of deformation of the frame 10, improving the reliability of the battery 100, and prolonging the cycle life of the battery 100.

In the foregoing technical solution, the buffer structure 30 is disposed between the two adjacent battery cells 20 and/or between the outermost battery cell 20 and the frame 10. When the battery cell 20 expands, the battery cell 20 moves in the first direction under the action of an expansion extrusion force, and the buffer structure 30 is compressed. Compared with the existing technology, the expansion extrusion force on the battery cell 20 can be reduced, and the extrusion force on the frame 10 can also be reduced, thereby greatly reducing a risk of deformation of the frame 10, and improving the reliability of the battery 100.

According to some embodiments of the present application, as shown in FIG. 2 to FIG. 5, the buffer structure 30 is disposed between the outermost battery cell 20 and the frame 10, and the buffer structure 30 abuts against both the adjacent battery cell 20 and the frame 10.

The outermost battery cell 20 is a battery cell 20 located at the outermost end in the first direction. The buffer structure 30 is disposed between the outermost battery cell 20 and the frame 10, and the buffer structure 30 abuts against both the adjacent battery cell 20 and the frame 10. After the buffer structure 30 is disposed between the outermost battery cell 20 and the frame 10, a surface of the buffer structure 30 opposite to the battery cell 20 abuts against the battery cell 20, and a surface of the buffer structure 30 opposite to the frame 10 abuts against the frame 10. On one hand, the buffer structure 30 can be stably disposed between the outermost battery cell 20 and the frame 10. In addition, the buffer structure 30 may support the battery cell 20, and the plurality of battery cells 20 can be reliably assembled in the frame 10, thereby reducing a risk that the battery cells 20 shakes in the frame 10. On the other hand, the buffer structure between the outermost battery cell 20 and the frame 10 can better reduce the extrusion force on the frame 10.

According to some embodiments of the present application, an orthographic projection of a shell of the battery cell 20 is located within an orthographic projection of the buffer structure 30 in the first direction.

To be specific, the orthographic projection of the shell of the battery cell 20 is located within the orthographic projection of the buffer structure 30 in a stacking direction of the battery cells 20, namely in an X direction in FIG. 2. An area of the orthographic projection of the buffer structure 30 is greater than or equal to an area of the orthographic projection of the shell of the battery cell 20. When the area of the orthographic projection of the buffer structure 30 is greater than the area of the orthographic projection of the shell of the battery cell 20, the orthographic projection of the shell of the battery cell 20 is located within the orthographic projection of the buffer structure 30. When the area of the orthographic projection of the buffer structure 30 is equal to the area of the orthographic projection of the shell of the battery cell 20, the orthographic projection of the shell of the battery cell 20 coincides with the orthographic projection of the buffer structure 30.

In the foregoing technical solution, the orthographic projection of the shell of the battery cell 20 is located within the orthographic projection of the buffer structure 30. An area for disposing the buffer structure 30 is sufficient. When the battery cell 20 expands, the battery cell 20 moves toward the buffer structure 30, the battery cell 20 can extrude the buffer structure 30, and the buffer structure 30 can absorb more expansion force. The expansion extrusion force on the battery cell 20 can be further reduced, and the extrusion force on the frame 10 can also be reduced, thereby greatly reducing a risk of deformation of the frame 10 under stress.

According to some embodiments of the present application, the buffer structure 30 has a first face 31 and a second face 32 opposite to each other. The first face 31 and the second face 32 are planar. The first face 31 and the second face 32 are in contact with the adjacent battery cell 20 and the frame 10, respectively.

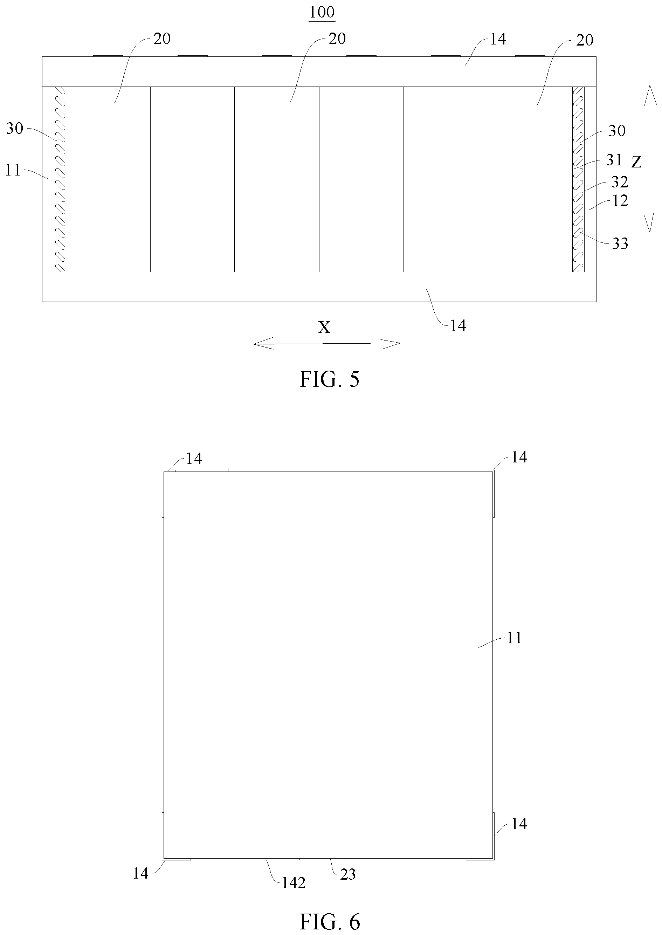

As shown in FIG. 5, in a thickness direction of the buffer structure 30, the buffer structure 30 has a first face 31 and a second face 32 opposite to each other. The first face 31 and the second face 32 are planar. The first face 31 of the buffer structure 30 between the outermost battery cell 20 and the frame 10 is in contact with an adjacent battery cell 20, and the second face 32 is in contact with an adjacent frame 10.

In the foregoing technical solution, the first face 31 and the second face 32 are disposed. The buffer structure 30 can be in face-to-face contact with the battery cell 20, and the buffer structure 30 can be in face-to-face contact with the frame 10. When the battery cell 20 moves in the first direction, the battery cell 20 and the buffer structure 30 can be uniformly stressed, thereby reducing stress concentration between the battery cell 20 and the buffer structure 30.

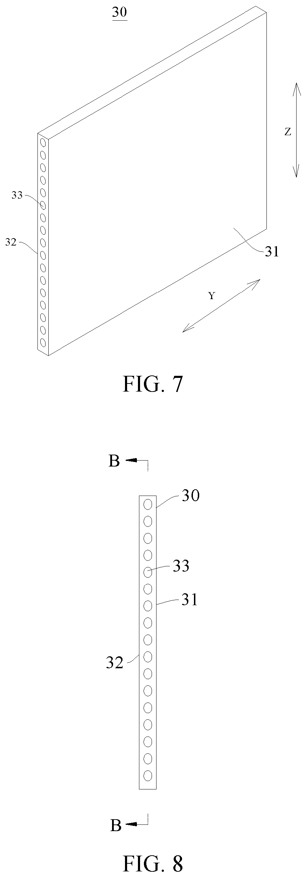

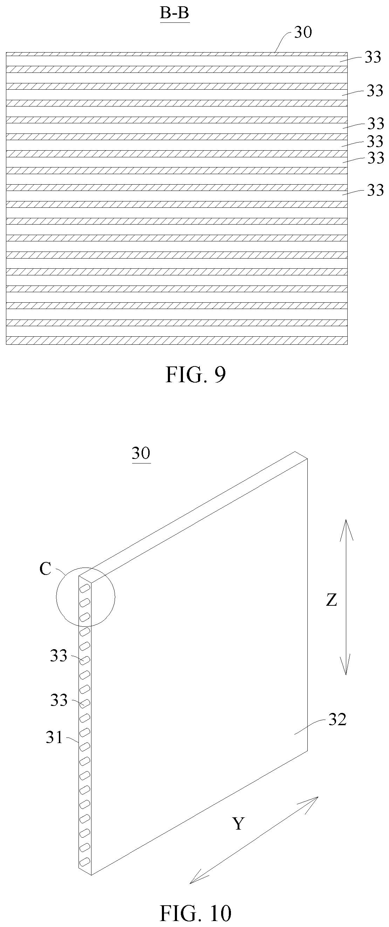

According to some embodiments of the present application, as shown in FIG. 7 and FIG. 10, a through hole 33 is provided in the buffer structure 30.

The through hole 33 plays a role of absorbing compressive deformation. When the battery cell 20 expands and moves in the stacking direction, the through hole 33 is disposed to be beneficial for the buffer structure 30 to be compressed, so that the buffer structure 30 can better absorb an expansion force. In addition, a weight of the buffer structure 30 can be reduced by disposing the through hole 33, which is beneficial for implementing a lightweight design of the battery 100. Also, materials for producing the buffer structure 30 can be reduced, and production costs of the buffer structure 30 can be reduced, thereby reducing production costs of the battery 100.

According to some embodiments of the present application, as shown in FIG. 7 and FIG. 10, a plurality of through holes 33 are provided.

When the battery cell 20 expands and moves in the stacking direction, the plurality of through holes 33 are disposed to be more beneficial for the buffer structure 30 to be compressed, so that the buffer structure 30 can better absorb the expansion force. In addition, the weight of the buffer structure 30 can be further reduced by disposing the plurality of through holes 33, which is more beneficial for implementing the lightweight design of the battery 100. Also, materials for producing the buffer structure 30 can be further reduced, and production costs of the buffer structure 30 can be further reduced, thereby further reducing production costs of the battery 100.

According to some embodiments of the present application, as shown in FIG. 7 and FIG. 10, the through hole has a strip-shaped structure and extends in a second direction perpendicular to the first direction.

The through hole 33 has a strip-shaped structure. It may alternatively be understood that the through hole 33 is a strip-shaped hole. The through hole 33 has a length, and the through hole 33 extends in the second direction perpendicular to the first direction. As shown in FIG. 7 and FIG. 10, the second direction may be a Y direction or a Z direction in FIG. 7 and FIG. 10. In the present application, an example in which the second direction is the Y direction in FIG. 7 and FIG. 10 is used for description. As an example, the through hole 33 extends to an end of the buffer structure 30 in the second direction.

In the foregoing technical solution, the through hole 33 extends in the second direction. An area of disposing the through hole 33 can be increased, which is more beneficial to compressing the buffer structure 30, so that the buffer structure 30 can better absorb the expansion force. In addition, the weight of the buffer structure 30 can be further reduced, which is more beneficial to implementing the lightweight design of the battery 100.

According to some embodiments of the present application, as shown in FIG. 9 and FIG. 10, the plurality of through holes 33 are parallel to each other.

The plurality of through holes 33 may extend in the second direction, and any two through holes 33 are parallel to each other. In the foregoing technical solution, the plurality of through holes 33 are parallel to each other. Structural strengths of regions of the buffer structure 30 can be approximately the same. When the buffer structure 30 is extruded, compression amounts of the regions of the buffer structure 30 are approximately the same.

According to some embodiments of the present application, the plurality of through holes 33 are spaced apart in a third direction perpendicular to the first direction, and the second direction is perpendicular to the third direction.

As shown in FIG. 7 and FIG. 10, the third direction may be the Y direction or the Z direction in FIG. 7 and FIG. 10. If the second direction is the Y direction in FIG. 7, the third direction is the Z direction in FIG. 7. If the second direction is the Z direction in FIG. 7, the third direction is the Y direction in FIG. 7. The present application is described by using an example in which the second direction is the Y direction in FIG. 7 and FIG. 10, and the third direction is the Z direction in FIG. 7 and FIG. 10. As an example, the plurality of through holes 33 are sequentially spaced apart in the third direction, and any two adjacent through holes 33 have a same spacing distance.

In the foregoing technical solution, the plurality of through holes 33 are spaced apart in the third direction. Structural strengths of regions of the buffer structure 30 can be further approximately the same. When the buffer structure 30 is extruded, compression amounts of the regions of the buffer structure 30 are approximately the same.

According to some embodiments of the present application, the through hole 33 has a circular or polygonal cross section.

It should be noted that the through hole 33 is configured as a hole having a circular cross section, or the through hole 33 is configured as a hole having a polygonal cross section. The polygon may be a triangle, a quadrangle, a pentagon, an "I" character, or the like.

In the foregoing technical solution, the through hole 33 has a circular or polygonal cross section. The through hole 33 can better absorb compressive deformation, thereby reducing stress on the battery cell 20 and the frame 10.

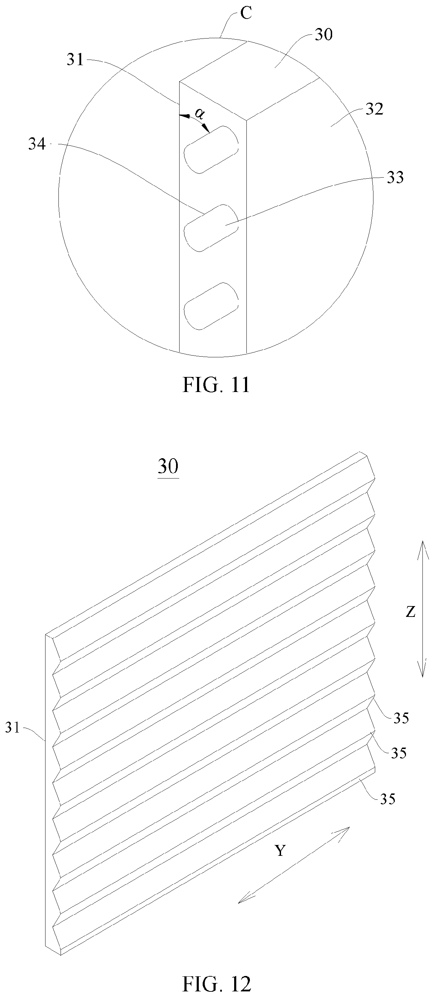

According to some embodiments of the present application, as shown in FIG. 10 and FIG. 11, the buffer structure 30 has a first face 31 and a second face 32 opposite to each other in the first direction. The through hole 33 has an elongated cross section. The through hole 33 is located between the first face 31 and the second face 32. In a direction from the first face 31 to the second face 32, the through hole 33 is obliquely arranged between the first face 31 and the second face 32.

The first face 31 may be planar, or a face having a particular bumpiness. The second face 32 may be planar, or a face having a particular bumpiness. An example in which the first face 31 and the second face 32 are planar is used in the present application for description. The through hole 33 is located between the first face 31 and the second face 32, and in a direction from the first face 31 to the second face 32, the through hole 33 is obliquely arranged between the first face 31 and the second face 32.

In the foregoing technical solution, the through hole 33 is obliquely arranged between the first face 31 and the second face 32. When the battery cell 20 expands, it is beneficial for the buffer structure 30 to be compressed.

According to some embodiments of the present application, as shown in FIG. 11, the cross section of the through hole 33 has a longest hole sidewall 34 opposite to the first face 31. An angle formed between the hole sidewall 34 and the first face 31 or the second face 32 is α, satisfying the following relation: 40°≤α≤50°.

The through hole 33 has a hole sidewall 34 opposite to the first face 31, the hole sidewall 34 may be planar. An angle formed between the hole sidewall 34 and the first face 31 or the second face 32 is α, satisfying the following relation: 40°≤α≤50°. In the present application, the angle α formed between the hole sidewall 34 and the first face 31 is used as an example for description, where α may be set to a value such as 40°, 45°, or 50°.

In the foregoing technical solution, 40°≤α≤50°. When the battery cell 20 expands, it is more beneficial for the buffer structure 30 to be compressed. When the volume of the battery cell 20 is reduced, it is beneficial for the buffer structure 30 to rebound to an original form.

According to some embodiments of the present application, as shown in FIG. 10, a height of an end of the through hole 33 close to the first face 31 is smaller than a height of an end of the through hole 33 close to the second face 32, and the first face 31 is configured to abut against the battery cell 20.

As shown in FIG. 10, a height at which an end of the elongated through hole 33 is disposed close to the first face 31 is greater than or smaller than a height at which an end of the elongated through hole 33 is disposed close to the second face 32. When the buffer structure 30 is assembled in the battery 100, the first face 31 of the buffer structure 30 is opposite to an end battery cell 20, and the second face 32 of the buffer structure 30 is opposite to the frame 10. Because a lower end of the through hole 33 is close to the first face 31 and an upper end of the through hole 33 is close to the second face 32, when the battery cell 20 expands, in a process in which the buffer structure 30 is compressed, the battery cell 20 has a tendency to move downward, thereby reducing a risk of upward movement of the battery cell 20.

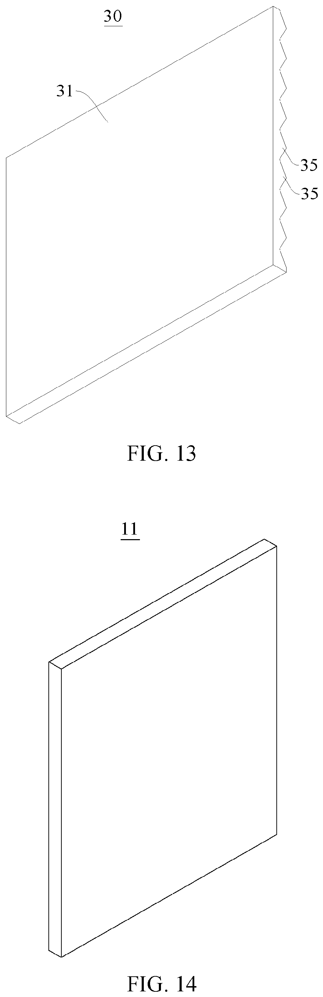

According to some embodiments of the present application, as shown in FIG. 12 and FIG. 13, the buffer structure 30 has a first face 31 and a second face 32 opposite to each other in the first direction. The first face 31 or the second face 32 is provided with a supporting protrusion 35. The supporting protrusion 35 abuts against the adjacent battery cell 20 or the frame 10.

The first face 31 or the second face 32 is provided with a supporting protrusion 35. The supporting protrusion 35 abuts against the adjacent battery cell 20 or the frame 10. It should be noted that when the first face 31 is provided with a supporting protrusion 35, the buffer structure 30 is assembled in the battery 100, and the supporting protrusion 35 abuts against the end battery cell 20. When the second face 32 is provided with a supporting protrusion 35, the buffer structure 30 is assembled in the battery 100, and the supporting protrusion 35 abuts against the frame 10. In the present application, an example in which the second face 32 is provided with a supporting protrusion 35 is used for description. After the buffer structure 30 is assembled in the battery 100, the first face 31 is in face-to-face contact with the battery cell 20, and the supporting protrusion 35 abuts against the frame 10.

In the foregoing technical solution, the first face 31 or the second face 32 is provided with the supporting protrusion 35. When the battery cell 20 moves in the first direction, deformation of the buffer structure 30 is facilitated. The buffer structure 30 is assembled in the battery 100. The supporting protrusion 35 abuts against the frame 10. An area of the frame 10 abutting against the buffer structure 30 can be reduced, and wear on the frame 10 and the buffer structure 30 can be reduced. If the supporting protrusion 35 abuts against the battery cell 20, an area of the battery cell 20 abutting against the buffer structure 30 can be reduced, and wear on the battery cell 20 and the buffer structure 30 can be reduced.

According to some embodiments of the present application, as shown in FIG. 12 and FIG. 13, a plurality of supporting protrusions 35 are provided.

A plurality of supporting protrusions 35 are provided. When the battery cell 20 moves in the first direction, it is more beneficial for the buffer structure 30 to deform.

According to some embodiments of the present application, as shown in FIG. 12, at least two of the supporting protrusions 35 are configured as strip-shaped protrusions parallel to each other.

As shown in FIG. 12, the supporting protrusion 35 has a triangular cross section. However, the present application is not limited thereto. The cross section shape of the supporting protrusion 35 may alternatively be another shape. As an example, the plurality of supporting protrusions 35 all extend in the Y direction in FIG. 12. It may alternatively be understood as that the plurality of supporting protrusions 35 all extend in the second direction, and the plurality of supporting protrusions 35 are parallel to each other. As an example, the plurality of supporting protrusions 35 are all sequentially spaced in the third direction.

In the foregoing technical solution, the at least two of the supporting protrusions 35 are configured as the strip-shaped protrusions parallel to each other. Structural strengths of regions of the buffer structure 30 can be approximately the same. When the buffer structure 30 is extruded, the buffer structure 30 is uniformly stressed, and compression amounts of the regions of the buffer structure 30 are approximately the same.

According to some embodiments of the present application, a compressive deformation amount of the buffer structure 30 is A, satisfying a relation: 10%≤A≤60%.

A thickness of the buffer structure 30 when not compressed is d1, a thickness of the buffer structure 30 after compressed is d2, and a compressive deformation amount A of the buffer structure 30 is obtained by using a formula (d1-d2)/d1, where 10%≤A≤60%. For example, A is 10%, 20%, 30%, 40%, 50%, or 60%. A test method for d1 may be: disassembling the battery 100, disassembling the buffer structure 30 from the battery 100, and measuring the thickness of the buffer structure 30 when not compressed. A test method for d2 may be: assembling the buffer structure 30 in the battery 100 to complete assembly of the battery 100, and measuring a thickness of the buffer structure 30 after compressed in a process of charging and discharging the battery 100. It should be noted that in a fully charged state of the battery 100, an expansion force of the buffer structure 30 is maximum. At this moment, the compressive deformation of the buffer structure 30 is maximum. In a fully discharged state of the battery 100, the compressive deformation of the buffer structure 30 is minimum.

In the foregoing technical solution, 10%≤A≤60%. The buffer structure 30 can be prevented from being excessively compressed, and the buffer structure 30 can rebound after being compressed.

According to some embodiments of the present application, a material of the buffer structure 30 includes one or more of high-polymer rubber, a polyurethane-type foamer, a pine elastic plate, or fiber wool.

A material of the buffer structure 30 is at least one of high-polymer rubber, a polyurethane-type foamer, a pine elastic plate, or fiber wool. When the material of the buffer structure 30 is the high-polymer rubber, the polyurethane-type foamer, the pine elastic plate, and the fiber wool, the plurality of materials may be stacked to form the buffer structure 30.

In the foregoing technical solution, the material of the buffer structure 30 is at least one of the high-polymer rubber, the polyurethane-type foamer, the pine elastic plate, or the fiber wool. The buffer structure 30 is compressible, and the buffer structure 30 is further elastic. After being compressed, the buffer structure 30 can rebound.

According to some embodiments of the present application, the plurality of battery cells 20 are movable in the first direction.

When the battery cell 20 expands, the battery cell 20 is subject to an expansion extrusion force, and then the plurality of battery cells 20 move in the first direction. In the foregoing technical solution, after the battery cell 20 is under the expansion extrusion force, the battery cell 20 may move in the first direction, and the buffer structure 30 is compressed to absorb an expansion force. Compared with the existing technology, an expansion compression force on the battery cell 20 can be further reduced, thereby further reducing a risk that the battery cell 20 is crushed. An extrusion force on the frame 10 can be reduced, thereby greatly reducing a risk of deformation of the frame 10, improving the reliability of the battery 100, and prolonging the cycle life of the battery 100.

According to some embodiments of the present application, the frame 10 is in guide fit with the plurality of battery cells 20 so that the plurality of battery cells 20 are movable in the first direction.

When the battery cell 20 expands, the battery cell 20 undergoes an expansion force. Under the action of the expansion force, two battery cells 20 move away from each other. In a process of moving the battery cell 20, the frame 10 is in guide fit with the plurality of battery cells 20 so that the battery cell 20 is movable in the stacking direction of the battery cell 20, thereby reducing a risk of offset of the battery cell 20.

According to some embodiments of the present application, as shown in FIG. 3 to FIG. 5, the frame 10 includes: a first end position-limiting member 11 and a second end position-limiting member 12, where in the first direction, the first end position-limiting member 11 and the second end position-limiting member 12 are respectively located at both ends of the battery cell 20, and the plurality of battery cells 20 are located between the first end position-limiting member 11 and the second end position-limiting member 12.

As an example, both the first end position-limiting member 11 and the second end position-limiting member 12 may be configured as flat structures, but the present application is not limited thereto. Specific structural shapes of the first end position-limiting member 11 and the second end position-limiting member 12 may be properly selected according to an actual use requirement. For example, at least one of the first end position-limiting member 11 and the second end position-limiting member 12 is a position-limiting rod. The buffer structure 30 is disposed between the first end position-limiting member 11 and an adjacent battery cell 20, and is disposed between the second end position-limiting member 12 and an adjacent battery cell 20.

In the foregoing technical solution, the first end position-limiting member 11 and the second end position-limiting member 12 are disposed. The first end position-limiting member 11 and the second end position-limiting member 12 may limit the battery cell 20 in the first direction.

According to some embodiments of the present application, the frame 10 further includes: a guide position-limiting member 13, where the guide position-limiting member 13 is connected between the first end position-limiting member 11 and the second end position-limiting member 12 so that the first end position-limiting member 11 and the second end position-limiting member 12 are fixedly connected, and the guide position-limiting member 13 is in guide fit with the plurality of battery cells 20 so that the battery cells 20 are movable in the first direction.

The first end position-limiting member 11 and the second end position-limiting member 12 are fixedly connected by using a guide position-limiting member 13, and the guide position-limiting member 13 is in guide fit with the plurality of battery cells 20. In a process of moving the battery cell 20, the battery cell 20 is movable in the first direction, thereby reducing a risk of offset of the battery cell 20 under the action of the expansion force. It should be noted that a specific structure of the guide position-limiting member 13 may be properly set according to an actual use situation, provided that the battery cell 20 moves in the stacking direction after the guide position-limiting member 13 is in guide fit with the battery cell 20.

According to some embodiments of the present application, the guide position-limiting member 13 includes: a first position-limiting plate, a second position-limiting plate, a third position-limiting plate, and a fourth position-limiting plate, where the first position-limiting plate, the second position-limiting plate, the third position-limiting plate, and the fourth position-limiting plate are connected between the first end position-limiting member 11 and the second end position-limiting member 12 and located outside the battery cell 20, the first position-limiting plate, the second position-limiting plate, the third position-limiting plate, and the fourth position-limiting plate are respectively opposite to different surfaces of the battery cell 20, and the first position-limiting plate, the second position-limiting plate, the third position-limiting plate, and the fourth position-limiting plate all abut against and limit the battery cell 20.

As an example, one end of the first position-limiting plate, one end of the second position-limiting plate, one end of the third position-limiting plate, and one end of the fourth position-limiting plate are all connected to the first end position-limiting member 11, and the other end of the first position-limiting plate, the other end of the second position-limiting plate, the other end of the third position-limiting plate, and the other end of the fourth position-limiting plate are all connected to the second end position-limiting member 12. The first position-limiting plate, the second position-limiting plate, the third position-limiting plate, and the fourth position-limiting plate are all plate-shaped structures. The first position-limiting plate, the second position-limiting plate, the third position-limiting plate, and the fourth position-limiting plate all extend in the first direction. As shown in FIG. 3, a placing direction of the battery 100 in FIG. 3 is used as an example for description. The first position-limiting plate may be opposite to an upper surface of the battery cell 20. The second position-limiting plate may be opposite to a lower surface of the battery cell 20. The third position-limiting plate and the fourth position-limiting plate are respectively opposite to two side surfaces of the battery cell 20. A first position-limiting plate, a second position-limiting plate, a third position-limiting plate, and a fourth position-limiting plate simultaneously limit and guide the battery cell 20. When the battery cell 20 is moved by the expansion force, the battery cell 20 is movable in the stacking direction of the battery cells 20.

According to some embodiments of the present application, as shown in FIG. 3, FIG. 4, FIG. 5, and FIG. 16, the guide position-limiting member 13 includes: a position-limiting sliding rail 14, where the position-limiting sliding rail 14 defines a guide space 141, the position-limiting sliding rail 14 is connected between the first end position-limiting member 11 and the second end position-limiting member 12, and shoulders 21 of the plurality of battery cells 20 are assembled in the guide space 141 so that the battery cells 20 abut against and are limited by the position-limiting sliding rail 14.

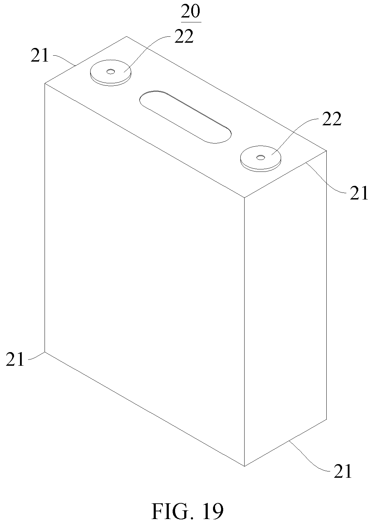

The position-limiting sliding rail 14 extends in the stacking direction of the battery cell 20. One end of the position-limiting sliding rail 14 is connected to the first end position-limiting member 11, and the other end of the position-limiting sliding rail 14 is connected to the second end position-limiting member 12. As shown in FIG. 19, the battery cell 20 has a side surface and two end faces. The side surface is connected between the two end faces. The side surface has a large face and a narrow face. The shoulder 21 of the battery cell 20 is formed at a connection between the narrow face and the two end faces. Using a square battery cell 20 in FIG. 19 as an example, the square battery cell 20 has four shoulders 21. **In** the foregoing technical solution, after the battery 100 is assembled, the shoulder 21 of the battery cell 20 is assembled in the guide space 141. When the battery cell 20 abuts against the position-limiting sliding rail 14, the position-limiting sliding rail 14 may limit movement of the battery cell 20, so that the battery cell 20 can move only in the stacking direction.

According to some embodiments of the present application, as shown in FIG. 3 to FIG. 5, a plurality of position-limiting sliding rails 14 are provided, at least two shoulders 21 of each battery cell 20 are correspondingly provided with the position-limiting sliding rails 14, and the shoulders 21 are located in the corresponding guide spaces 141.

A quantity of the position-limiting sliding rails 14 is greater than or equal to two. For example, two shoulders 21 located below the battery cell 20 are respectively correspondingly provided with one position-limiting sliding rail 14, or two shoulders 21 obliquely opposite to each other on the battery cell 20 are respectively correspondingly provided with one position-limiting sliding rail 14, or each shoulder 21 of the battery cell 20 is respectively provided with one position-limiting sliding rail 14. **In** the present application, an example in which each shoulder 21 of the battery cell 20 is respectively provided with one position-limiting sliding rail 14 is used for description. The shoulder 21 of the battery cell 20 is located in the corresponding guide space 141.

As shown in FIG. 3, there may be four position-limiting sliding rails 14, there are four shoulders 21 of the battery cell 20, and the four shoulders 21 of each battery cell 20 are respectively correspondingly provided with one position-limiting sliding rail 14.

In the foregoing technical solution, when the battery cell 20 is moved by an expansion force, the battery cell 20 is guided by using the plurality of position-limiting sliding rails 14 simultaneously, and the battery cell 20 can move only in the stacking direction of the battery cells 20, thereby further reducing a risk of offset of the battery cells 20. In addition, the battery cell 20 is supported by using the plurality of position-limiting sliding rails 14, and the battery cell 20 can be stably mounted in the frame 10.

According to some embodiments of the present application, as shown in FIG. 6, two shoulders 21 located below the battery cell 20 are separately correspondingly provided with one position-limiting sliding rail 14, to form an exhaust gap 142 between the two position-limiting sliding rails 14. The exhaust gap 142 is opposite to an anti-explosion valve 23 of the battery cell 20.

As shown in FIG. 3 and FIG. 6, two shoulders 21 below the battery cell 20 are respectively provided with one position-limiting sliding rail 14. An exhaust gap 142 is formed between the two position-limiting sliding rails 14 corresponding to the two shoulders 21 below the battery cell 20. The exhaust gap 142 is located below the battery cell 20. An anti-explosion valve 23 of the battery cell 20 is disposed downward, and the anti-explosion valve 23 of the battery cell 20 corresponds to the exhaust gap 142. When a thermal runaway occurs in the battery cell 20, the anti-explosion valve 23 is turned on, and the exhaust gap is beneficial for a material sprayed from the anti-explosion valve 23 out of the battery cell 20 more quickly, thereby facilitating discharge from the battery 100.

According to some embodiments of the present application, the battery 100 includes: a tray, where the tray is configured to support the battery cell 20, the battery cell 20 is mounted on the tray, the tray is provided with an exhaust gap 142, when a thermal runaway occurs in the battery cell 20, the anti-explosion valve 23 is turned on, and a material is sprayed from the anti-explosion valve 23 out of the battery 100 through the exhaust gap 142, thereby facilitating discharge from the battery 100.

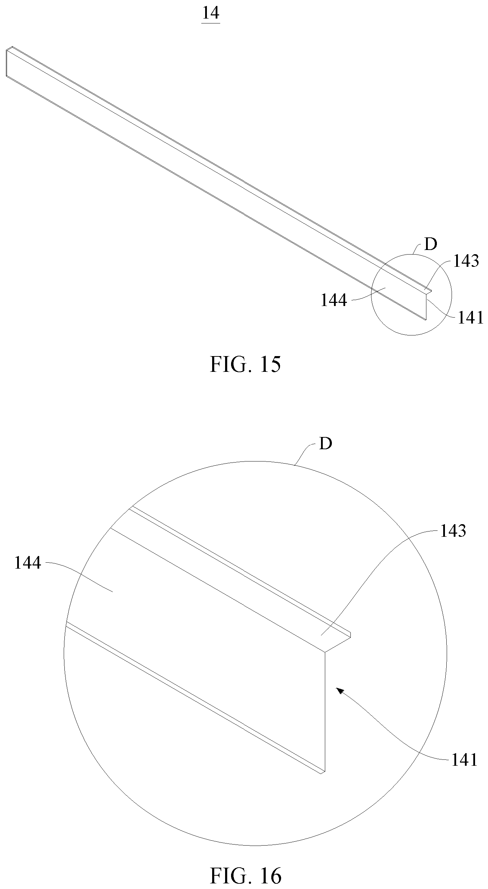

According to some embodiments of the present application, as shown in FIG. 15 and FIG. 16, the position-limiting sliding rails 14 separately include: a first plate body 143 and a second plate body 144, where the first plate body 143 is connected to the second plate body 144, and an angle is formed between the first plate body 143 and the second plate body 144 so that the position-limiting sliding rail 14 defines the guide space 141.

The first plate body 143 and the second plate body 144 are fixedly connected, and the first plate body 143 and the second plate body 144 may be integrally formed. The angle formed between the first plate body 143 and the second plate body 144 may be an acute angle, an obtuse angle, or a right angle, as long as the first plate body 143 and the second plate body 144 form an angle, and the magnitude of the angle between the first plate body 143 and the second plate body 144 is specifically set according to an actual requirement.

In the foregoing technical solution, an angle is formed between the first plate body 143 and the second plate body 144, thereby achieving an effect that the position-limiting sliding rail 14 defines the guide space 141, and enabling the position-limiting sliding rail 14 to be structurally reasonable.

According to some embodiments of the present application, the first plate body 143 is perpendicular to the second plate body 144.

It should be noted that the first plate body 143 is approximately perpendicular to the second plate body 144, or the first plate body 143 is completely perpendicular to the second plate body 144. The position-limiting sliding rail 14 is configured as an "L"-shaped structure. At the shoulder 21 of the battery cell 20, a narrow face and an end face of the battery cell 20 are relatively flat, and the narrow face and the end face are approximately vertical or perpendicular. The first plate body 143 is perpendicular to the second plate body 144. After the position-limiting sliding rail 14 and the battery cell 20 are assembled, the first plate body 143 and the second plate body 144 can reliably limit the battery cell 20, thereby improving the reliability of the battery 100.

According to some embodiments of the present application, as shown in FIG. 6, the first plate body 143 abuts against and limits an end face of the battery cell 20, and the second plate body 144 abuts against and limits a side face of the battery cell 20.

End faces of the battery cell 20 are an upper end face and a lower end face in a Z direction in FIG. 6. The first plate body 143 of the position-limiting sliding rail 14 corresponding to the upper end face abuts against and limits the upper end face of the battery cell 20. The first plate body 143 of the position-limiting sliding rail 14 corresponding to the lower end face abuts against and limits the lower end face of the battery cell 20. Side faces of the battery cell 20 are two side faces in a Y direction in FIG. 6. The second plate body 144 of the position-limiting sliding rail 14 corresponding to the corresponding side face abuts against and limits the corresponding side face of the battery cell 20.

In the foregoing technical solution, the first plate body 143 abuts against and limits the end face of the battery cell 20, and the second plate body 144 abuts against and limits the side face of the battery cell 20. Each position-limiting sliding rail 14 can limit the battery cell 20 in the Y and Z directions, thereby improving the reliability of the battery 100.

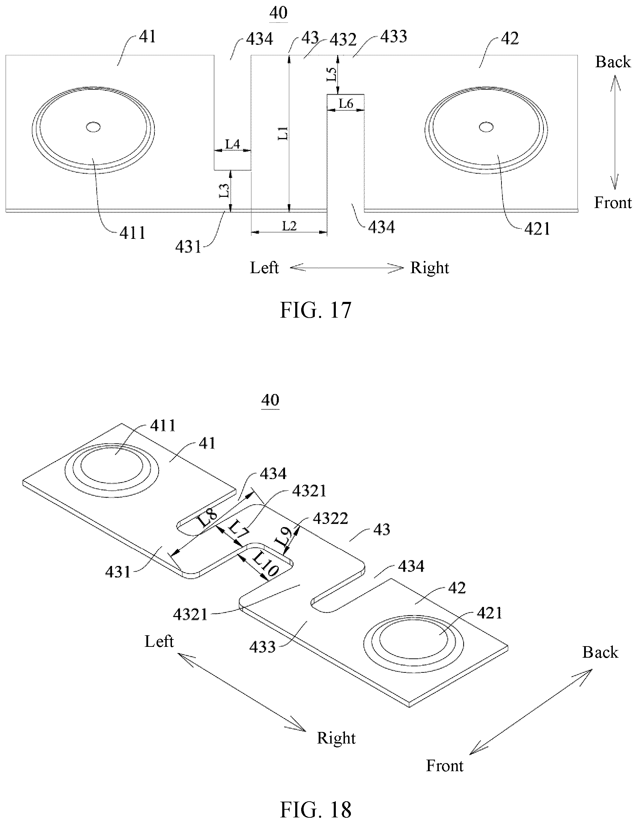

According to some embodiments of the present application, as shown in FIG. 17 and FIG. 18, the battery 100 further includes: an electrical connector 40, where the electrical connector 40 includes a first connection portion 41, a second connection portion 42, and an elastic section 43, the first connection portion 41 and the second connection portion 42 are respectively connected to electrode terminals 22 of the corresponding battery cells 20, and the elastic section 43 is connected between the first connection portion 41 and the second connection portion 42.

The electrical connector 40 is a metal part. The electrical connector 40 is connected between two battery cells 20, to implement an electrical connection between the two battery cells 20. The first connection portion 41 is connected to an electrode terminal 22 of one battery cell 20 of two electrically connected battery cells 20, and the second connection portion 42 is connected to an electrode terminal 22 of one battery cell 20 of two electrically connected battery cells 20, to implement an electrical connection between the two battery cells 20.

As an example, as shown in FIG. 17 and FIG. 18, the first connection portion 41 has a first connection region 411. The first connection region 411 is connected to the electrode terminal 22 of the battery cell 20. For example, the first connection region 411 is soldered to the electrode terminal 22. The second connection portion 42 has a second connection region 421. The second connection region 421 is connected to the electrode terminal 22 of the battery cell 20. For example, the second connection region 421 is soldered to the electrode terminal 22. Because the electrical connector 40 is connected between the two battery cells 20, when the battery cell 20 moves in the stacking direction, if the electrical connector 40 is not elastic, a connection between the electrical connector 40 and the electrode terminal may be torn or broken.

However, in the present application, the elastic section 43 is connected between the first connection portion 41 and the second connection portion 42. The elastic section 43 has particular elasticity. When the battery cell 20 moves in the first direction, the elastic section 43 is extended, thereby reducing a risk of tearing or breaking a connection between the electrical connector 40 and the electrode terminal 22, improving the reliability of connection between the electrical connector 40 and the electrode terminal 22, and improving the working reliability of the battery 100. When the battery cell 20 is not subject to the expansion force, the battery cell 20 may be moved toward a return direction under the elastic force of the buffer structure 30, and the elastic section 43 restores to be elastically deformed.

According to some embodiments of the present application, as shown in FIG. 17, the elastic section 43 has a first connection section 431, a second connection section 432, and a third connection section 433. The first connection section 431 is connected between the second connection section 432 and the first connection portion 41. The third connection section 433 is connected between the second connection section 432 and the second connection portion 42.

The first connection section 431 is connected between the second connection section 432 and the first connection portion 41, so that the second connection section 432 is spaced apart from the first connection portion 41, and a gap is formed between the second connection section 432 and the first connection portion 41. The third connection section 433 is connected between the second connection section 432 and the second connection portion 42, so that the second connection section 432 is spaced apart from the second connection portion 42, and a gap is formed between the second connection section 432 and the second connection portion 42. The elastic section 43 is elastic, and the elastic section 43 is flexible.

According to some embodiments of the present application, as shown in FIG. 17, a dimension of the second connection section 432 in a width direction of the electrical connector 40 is greater than a dimension of the second connection section 432 in a length direction of the electrical connector 40.

A dimension L1 of the second connection section 432 in the width direction of the electrical connector 40 is greater than a dimension L2 of the second connection section 432 in the length direction of the electrical connector 40, so that the second connection section 432 extends in the width direction of the electrical connector 40. After the first connection section 431 is connected between the second connection section 432 and the first connection portion 41 and the third connection section 433 is connected between the second connection section 432 and the second connection portion 42, the elastic section 43 may be elastic, and the electrical connector 40 may be flexible.

According to some embodiments of the present application, as shown in FIG. 17, a dimension of the first connection section 431 in the width direction of the electrical connector 40 is less than a dimension of the first connection section 431 in the length direction of the electrical connector 40, and/or a dimension of the third connection section 433 in the width direction of the electrical connector 40 is less than a dimension of the third connection section 433 in the length direction of the electrical connector 40.

A dimension L3 of the first connection section 431 in the width direction of the electrical connector 40 is less than a dimension L4 of the first connection section 431 in the length direction of the electrical connector 40, or a dimension L5 of the third connection section 433 in the width direction of the electrical connector 40 is less than a dimension L6 of the third connection section 433 in the length direction of the electrical connector 40. Alternatively, the dimension L3 of the first connection section 431 in the width direction of the electrical connector 40 is less than the dimension L4 of the first connection section 431 in the length direction of the electrical connector 40, and the dimension L5 of the third connection section 433 in the width direction of the electrical connector 40 is less than the dimension L6 of the third connection section 433 in the length direction of the electrical connector 40. In the present application, an example in which the dimension of the first connection section 431 in the width direction of the electrical connector 40 is less than the dimension of the first connection section 431 in the length direction of the electrical connector 40 and the dimension of the third connection section 433 in the width direction of the electrical connector 40 is less than the dimension of the third connection section 433 in the length direction of the electrical connector 40 is used for description.

In addition, a dimension of the first connection section 431 in the width direction of the electrical connector 40 is less than a dimension of the first connection section 431 in the length direction of the electrical connector 40. The first connection section 431 extends in the length direction of the electrical connector 40, the elastic section 43 may be elastic, and the flexibility of the electrical connector 40 is improved. In addition, the dimension of the third connection section 433 in the width direction of the electrical connector 40 is less than the dimension of the third connection section 433 in the length direction of the electrical connector 40. The third connection section 433 extends in the length direction of the electrical connector 40, the flexibility of the electrical connector 40 is further improved, and it is more beneficial for the electrical connector 40 to be flexible.

According to some embodiments of the present application, as shown in FIG. 18, the second connection section 432 includes: a plurality of first section bodies 4321 and at least one second section body 4322, where the plurality of first section bodies 4321 are sequentially spaced apart in the length direction of the electrical connector 40, and the second section body 4322 is connected between any two adjacent first section bodies 4321.

A quantity of the first section bodies 4321 is greater than or equal to two. For example, the quantity of the first section bodies 4321 is two, three, four, or the like. The present application is described with two first section bodies 4321 and one second section body 4322. The second section body 4322 is connected between the two first section bodies 4321. One of the two first section bodies 4321 is connected to the first connection section 431, and the other of the two first section bodies 4321 is connected to the third connection section 433.

In the foregoing technical solution, the plurality of first section bodies 4321 and the at least one second section body 4322 are disposed. The elastic section 43 can be elastic, and the electrical connector 40 is flexible, thereby reducing a risk that the electrical connector 40 is not flexible when the battery cell 20 moves.

According to some embodiments of the present application, a dimension of at least one of the first section bodies 4321 in the width direction of the electrical connector 40 is greater than a dimension of the first section body 4321 in the length direction of the electrical connector 40, and a dimension of the second section body 4322 in the width direction of the electrical connector 40 is less than a dimension of the second section body 4322 in the length direction of the electrical connector 40.

In the present application, a dimension L7 of the plurality of first section bodies 4321 in the width direction of the electrical connector 40 is greater than a dimension L8 of the first section body 4321 in the length direction of the electrical connector 40. The dimension L7 of the first section body 4321 in the width direction of the electrical connector 40 is greater than the dimension L8 of the first section body 4321 in the length direction of the electrical connector 40, and a dimension L9 of the second section body 4322 in the width direction of the electrical connector 40 is less than a dimension L10 of the second section body 4322 in the length direction of the electrical connector 40. The plurality of first section bodies 4321 extend in the width direction of the electrical connector 40, and the second section body 4322 extends in the length direction of the electrical connector 40. The elastic section 43 can be elastic, and the electrical connector 40 is flexible, thereby reducing a risk that the electrical connector 40 is not flexible when the battery cell 20 moves.

According to some embodiments of the present application, the at least two first section bodies 4321 are parallel to each other.

The plurality of first section bodies 4321 extend in the width direction of the electrical connector 40. As an example, the plurality of first section bodies 4321 are parallel to each other. The at least two first section bodies 4321 are parallel to each other. The second connection section 432 can be configured as a bending structure, and the elasticity of the second connection section 432 can be improved, thereby improving the elasticity of the electrical connector 40.

According to some embodiments of the present application, in the length direction of the electrical connector 40, an outermost second section body 4322 is staggered from an adjacent first connection section 431 and/or third connection section 433 in the width direction of the electrical connector 40.

In the length direction of the electrical connector 40, an end second section body 4322 is staggered from an adjacent first connection section 431 or third connection section 433 in the width direction of the electrical connector 40. Alternatively, in the length direction of the electrical connector 40, an end second section body 4322 is staggered from an adjacent first connection section 431 or third connection section 433 in the width direction of the electrical connector 40.

In the foregoing technical solution, the outermost second section body 4322 is staggered from the adjacent first connection section 431 and/or third connection section 433 in the width direction of the electrical connector 40. The elasticity of the electrical connector 40 can be further increased, and it is beneficial for the electrical connector 40 to be flexible.

According to some embodiments of the present application, in the width direction of the electrical connector 40, the first connection section 431 and the third connection section 433 are staggered.

The first connection section 431 and the third connection section 433 are staggered in the width direction of the electrical connector 40. The elastic section 43 can be elastic, and the elastic section 43 can be flexible, thereby facilitating deformation of the elastic section 43, and further preventing the electrical connector 40 from being disconnected from the corresponding electrode terminal.

According to some embodiments of the present application, as shown in FIG. 18, in the length direction of the electrical connector 40, the first connection section 431 and the third connection section 433 correspond to each other.

As shown in FIG. 18, an example in which there are two first section bodies 4321 and one second section body 4322 is used for description. When there are two first section bodies 4321, one second section body 4322 is connected to the two first section bodies 4321. At this moment, if the first connection section 431 and the third connection section 433 are staggered in the width direction of the electrical connector 40, to be specific, the first connection section 431 and the third connection section 433 do not correspond to each other in the length direction of the electrical connector 40, the deformation amount of the elastic section 43 is relatively small. Consequently, the amount of flexibility of the electrical connector 40 is relatively small. The first connection section 431 and the third connection section 433 are correspondingly disposed in the length direction of the electrical connector 40. The deformation amount of the elastic section 43 can be increased, and the flexibility of the electrical connector 40 can be improved.

According to some embodiments of the present application, the elastic section 43 may be configured as a helical structure.

In this embodiment, the elastic section 43 may be set in a shape similar to a helical spring. The elastic section 43 is elastic, and the elastic section 43 is flexible, so that the electrical connector 40 is flexible.

According to some embodiments of the present application, the first connection portion 41, the second connection portion 42, and the elastic section 43 are integrally formed. In this technical solution, the first connection portion 41, the second connection portion 42, and the elastic section 43 are integrally formed, so that the connection strength between the first connection portion 41, the second connection portion 42, and the elastic section 43 can be improved, and the elastic section 43 can be prevented from being separated from the first connection portion 41 and the second connection portion 42. In addition, the electrical connector 40 does not need to be separately produced, so that development of molds can be reduced, and manufacturing costs can be reduced.

According to some embodiments of the present application, as shown in FIG. 17 and FIG. 18, the elastic section 43 has a plurality of notch grooves 434. The plurality of notch grooves 434 penetrate the elastic section 43 in a thickness direction of the elastic section 43. The plurality of notch grooves 434 are sequentially spaced apart in the length direction of the electrical connector 40. At least one notch groove 434 extends to a side edge of the elastic section 43 in the width direction of the electrical connector 40.

As shown in FIG. 17 and FIG. 18, the electrical connector 40 includes a first connection portion 41, a second connection portion 42, and an elastic section 43. The first connection portion 41 and the second connection portion 42 are respectively connected to electrode terminals 22 of the corresponding battery cells 20. The elastic section 43 is connected between the first connection portion 41 and the second connection portion 42. The elastic section 43 has a plurality of notch grooves 434. The plurality of notch grooves 434 penetrate the elastic section 43 in a thickness direction of the elastic section 43. The plurality of notch grooves 434 are sequentially spaced apart in the length direction of the electrical connector 40. At least one notch groove 434 extends to a side edge of the elastic section 43 in the width direction of the electrical connector 40. A plurality of notch grooves 434 are disposed. The elastic section 43 can be elastic. When the battery cell 20 moves, a risk of tearing or breaking a connection between the electrical connector 40 and the electrode terminal of the corresponding battery cell 20 is reduced by using the flexible elastic section 43.

According to some embodiments of the present application, in the width direction of the electrical connector 40, both sides of the elastic section 43 are separately provided with the notch groove 434.

As shown in FIG. 17 and FIG. 18, in the width direction of the electrical connector 40, both side edges of the elastic section 43 are provided with a notch groove 434. In this way, the electrical connector 40 can be flexible, thereby improving the working performance of the electrical connector 40.

According to some embodiments of the present application, a dimension of each notch groove 434 in the width direction of the electrical connector 40 is greater than a dimension of the notch groove 434 in the length direction of the electrical connector 40.

A dimension of each notch groove 434 in the width direction of the electrical connector 40 is greater than a dimension of the notch groove 434 in the length direction of the electrical connector 40. The notch groove 434 is configured as a strip-shaped groove. The notch groove 434 can be set as a strip-shaped notch groove 434. When the first connection portion 41 and the second connection portion 42 are stressed, the elastic section 43 is deformed.

It should be noted that the width direction of the electrical connector 40 is a front-back direction in FIG. 17 and FIG. 18, and the length direction of the electrical connector 40 is a left-right direction in FIG. 17 and FIG. 18.

The present application further provides a power consuming apparatus 200. The power consuming apparatus 200 includes the battery 100 in the foregoing embodiment. The battery 100 may be configured to provide power for the power consuming apparatus 200.

In the following, some embodiments of the present application are described with reference to FIG. 2 to FIG. 4.

The battery 100 includes a frame 10, a buffer structure 30, and a plurality of battery cells 20. The buffer structure 30 is disposed between the frame 10 and an end battery cell 20. As an example, the frame 10 includes a first end position-limiting member 11, a second end position-limiting member 12, and a plurality of position-limiting sliding rails 14. The plurality of battery cells 20 are disposed between the first end position-limiting member 11 and the second end position-limiting member 12. The buffer structure 30 is disposed between the first end position-limiting member 11 and the end battery cell 20. The buffer structure 30 is disposed between the second end position-limiting member 12 and the end battery cell 20. The plurality of position-limiting sliding rails 14 are connected between the first end position-limiting member 11 and the second end position-limiting member 12, to fixedly assemble the first end position-limiting member 11 and the second end position-limiting member 12. In addition, the plurality of position-limiting sliding rails 14 are respectively correspondingly assembled with shoulders 21 at different positions of the battery cell 20. The plurality of position-limiting sliding rails 14 may guide and limit the battery cell 20, so that the battery cell 20 moves in a stacking direction of the battery cells 20.

It should be noted that the embodiments in the present application and features in the embodiments may be mutually combined in a case that no conflict occurs.

In the descriptions of this specification, descriptions using reference terms "an embodiment", "some embodiments", "an exemplary embodiment", "an example", "a specific example", or "some examples" mean that specific characteristics, structures, materials, or features described with reference to this embodiment or example are included in at least one embodiment or example of the present application. In this specification, exemplary descriptions of the foregoing terms do not necessarily refer to the same embodiment or example. In addition, the described specific features, structures, materials, or characteristics may be combined in a proper manner in any one or more of the embodiments or examples.

Although the embodiments of the present application have been shown and described, a person of ordinary skill in the art may understand that various changes, modifications, replacements, and variations may be made to the embodiments without departing from the principles and spirit of the present application, and the scope of the present application is as defined by the appended claims and their equivalents.

## Claims

1. A battery, comprising:
a frame;
a plurality of battery cells, the plurality of battery cells being all disposed in the frame, and the plurality of battery cells being stacked in a first direction; and
a buffer structure, the buffer structure being disposed between at least two adjacent battery cells and/or between an outermost battery cell and the frame in the first direction.

2. The battery according to claim 1, wherein the buffer structure is disposed between the outermost battery cell and the frame, and the buffer structure abuts against both the adjacent battery cell and the frame.

3. The battery according to claim 1 or 2, wherein an orthographic projection of a shell of the battery cell is located within an orthographic projection of the buffer structure in the first direction.

4. The battery according to claim 2, wherein the buffer structure has a first face and a second face opposite to each other, the first face and the second face are planar, and the first face and the second face are in contact with the adjacent battery cell and the frame respectively.

5. The battery according to any one of claims 1 to 4, wherein a through hole is provided in the buffer structure.

6. The battery according to claim 5, wherein a plurality of through holes are provided.

7. The battery according to claim 6, wherein the through hole has a strip-like shape and extends in a second direction perpendicular to the first direction.

8. The battery according to claim 7, wherein the plurality of through holes are parallel to each other.

9. The battery according to claim 7 or 8, wherein the plurality of through holes are spaced apart in a third direction perpendicular to the first direction, and the second direction is perpendicular to the third direction.

10. The battery according to any one of claims 5 to 9, wherein the through hole has a circular or polygonal cross section.

11. The battery according to any one of claims 1 to 10, wherein a through hole is provided in the buffer structure, the buffer structure has a first face and a second face opposite to each other in the first direction, the through hole has an elongated cross section, the through hole is located between the first face and the second face, and in a direction from the first face to the second face, the through hole is obliquely arranged between the first face and the second face.

12. The battery according to claim 11, wherein the cross section of the through hole has a longest hole sidewall opposite to the first face, and an angle formed between the hole sidewall and the first face or the second face is α, satisfying the following relation: 40°≤α≤50°.

13. The battery according to claim 11, wherein a height of an end of the through hole close to the first face is smaller than a height of an end of the through hole close to the second face, and the first face is configured to abut against the battery cell.

14. The battery according to any one of claims 1 to 3 and 5 to 13, wherein the buffer structure has a first face and a second face opposite to each other in the first direction, the first face or the second face is provided with a supporting protrusion, and the supporting protrusion abuts against the adjacent battery cell or the frame.

15. The battery according to claim 14, wherein a plurality of supporting protrusions are provided.

16. The battery according to claim 15, wherein at least two of the supporting protrusions are configured as strip-shaped protrusions parallel to each other.

17. The battery according to any one of claims 1 to 16, wherein a compressive deformation amount of the buffer structure is A, satisfying a relation: 10%≤A≤60%.

18. The battery according to any one of claims 1 to 17, wherein a material of the buffer structure comprises one or more of high-polymer rubber, a polyurethane-type foamer, a pine elastic plate, or fiber wool.

19. The battery according to any one of claims 1 to 18, wherein the plurality of battery cells are movable in the first direction.

20. The battery according to any one of claims 1 to 19, wherein the frame is in guide fit with the plurality of battery cells so that the plurality of battery cells are movable in the first direction.

21. The battery according to any one of claims 1 to 20, wherein the frame comprises: a first end position-limiting member and a second end position-limiting member, in the first direction, the first end position-limiting member and the second end position-limiting member being respectively located at both ends of the battery cell, and the plurality of battery cells being located between the first end position-limiting member and the second end position-limiting member.

22. The battery according to claim 21, wherein the frame further comprises a guide position-limiting member, the guide position-limiting member being connected between the first end position-limiting member and the second end position-limiting member so that the first end position-limiting member and the second end position-limiting member are fixedly connected, and the guide position-limiting member being in guide fit with the plurality of battery cells so that the battery cells are movable in the first direction.

23. The battery according to claim 22, wherein the guide position-limiting member comprises: a first position-limiting plate, a second position-limiting plate, a third position-limiting plate, and a fourth position-limiting plate, wherein the first position-limiting plate, the second position-limiting plate, the third position-limiting plate, and the fourth position-limiting plate are connected between the first end position-limiting member and the second end position-limiting member and located outside the battery cell; the first position-limiting plate, the second position-limiting plate, the third position-limiting plate, and the fourth position-limiting plate are respectively opposite to different surfaces of the battery cell; and the first position-limiting plate, the second position-limiting plate, the third position-limiting plate, and the fourth position-limiting plate all abutting against and limiting the battery cell.

24. The battery according to claim 22, wherein the guide position-limiting member comprises a position-limiting sliding rail, the position-limiting sliding rail defining a guide space, the position-limiting sliding rail being connected between the first end position-limiting member and the second end position-limiting member, and the plurality of battery cells being assembled in the guide space so that the battery cells abut against and are limited by the position-limiting sliding rail.

25. The battery according to claim 24, wherein a plurality of position-limiting sliding rails are provided, at least two shoulders of each battery cell are correspondingly provided with the position-limiting sliding rails, and the shoulders are located in the corresponding guide space.

26. The battery according to claim 24 or 25, wherein two shoulders located at a lower part of the battery cell are separately correspondingly provided with one position-limiting sliding rail, to form an exhaust gap between the two position-limiting sliding rails, and the exhaust gap is opposite to an anti-explosion valve of the battery cell.

27. The battery according to any one of claims 24 to 26, wherein the position-limiting sliding rails each comprise: a first plate body and a second plate body, the first plate body being connected to the second plate body, and an angle being formed between the first plate body and the second plate body so that the position-limiting sliding rail defines the guide space.

28. The battery according to claim 27, wherein the first plate body is perpendicular to the second plate body.

29. The battery according to claim 27 or 28, wherein the first plate body abuts against and limits an end face of the battery cell, and the second plate body abuts against and limits a side face of the battery cell.

30. The battery according to any one of claims 1 to 29, further comprising an electrical connector, the electrical connector comprising: a first connection portion, a second connection portion, and an elastic section, the first connection portion and the second connection portion being respectively connected to electrode terminals of the corresponding battery cells, and the elastic section being connected between the first connection portion and the second connection portion.

31. The battery according to claim 30, wherein the elastic section has a first connection section, a second connection section, and a third connection section, the first connection section is connected between the second connection section and the first connection portion, and the third connection section is connected between the second connection section and the second connection portion.

32. The battery according to claim 31, wherein a dimension of the second connection section in a width direction of the electrical connector is greater than a dimension of the second connection section in a length direction of the electrical connector.

33. The battery according to claim 32, wherein a dimension of the first connection section in the width direction of the electrical connector is less than a dimension of the first connection section in the length direction of the electrical connector, and/or a dimension of the third connection section in the width direction of the electrical connector is less than a dimension of the third connection section in the length direction of the electrical connector.

34. The battery according to claim 31, wherein the second connection section comprises: a plurality of first section bodies and at least one second section body, the plurality of first section bodies being sequentially spaced apart in the length direction of the electrical connector, and the second section body being connected between any two adjacent first section bodies.

35. The battery according to claim 34, wherein a dimension of at least one of the first section bodies in the width direction of the electrical connector is greater than a dimension of the first section body in the length direction of the electrical connector, and a dimension of the second section body in the width direction of the electrical connector is less than a dimension of the second section body in the length direction of the electrical connector.

36. The battery according to claim 34 or 35, wherein at least two of the first section bodies are parallel to each other.

37. The battery according to any one of claims 34 to 36, wherein in the length direction of the electrical connector, an outermost second section body is staggered from an adjacent first connection section and/or third connection section in the width direction of the electrical connector.

38. The battery according to any one of claims 31 to 37, wherein in the width direction of the electrical connector, the first connection section and the third connection section are staggered.

39. The battery according to any one of claims 31 to 37, wherein in the length direction of the electrical connector, the first connection section and the third connection section correspond to each other.

40. The battery according to claim 30, wherein the elastic section is configured as a helical structure.

41. The battery according to any one of claims 30 to 40, wherein the first connection portion, the second connection portion, and the elastic section are integrally formed.

42. The battery according to any one of claims 30 to 41, wherein the elastic section has a plurality of notch grooves, the plurality of notch grooves penetrate the elastic section in a thickness direction of the elastic section, the plurality of notch grooves are sequentially spaced apart in the length direction of the electrical connector, and at least one of the notch grooves extends to a side edge of the elastic section in the width direction of the electrical connector.

43. The battery according to claim 42, wherein a dimension of each notch groove in the width direction of the electrical connector is greater than a dimension of the notch groove in the length direction of the electrical connector.

44. The battery according to claim 42 or 43, wherein in the width direction of the electrical connector, both sides of the elastic section are separately provided with notch grooves.

45. A power consuming apparatus, comprising the battery according to any one of claims 1 to 44.
